(19)

Europäisches
Patentamt
European
Patent Office
Office européen
des brevets

(11) **EP 4 506 077 A1**

(12) **EUROPEAN PATENT APPLICATION**
published in accordance with Art. 153(4) EPC

(43) Date of publication:
**12.02.2025 Bulletin 2025/07**

(21) Application number: **22944331.2**

(22) Date of filing: **02.06.2022**

(51) International Patent Classification (IPC):
***B21C 51/00*** (2006.01)   ***B21B 1/40*** (2006.01)
***B65H 63/00*** (2006.01)

(52) Cooperative Patent Classification (CPC):
**G01N 19/08; B21B 1/40; B21C 51/00; B65H 63/00;
H01M 4/0435**

(86) International application number:
**PCT/CN2022/096899**

(87) International publication number:
**WO 2023/231002 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
(Hong Kong) Limited
Central, Central And Western District (HK)**

(72) Inventors:
• **FAN, Xiaoyun
Ningde, Fujian 352100 (CN)**
• **XIE, Guotao
Ningde, Fujian 352100 (CN)**

• **CHENG, Tao
Ningde, Fujian 352100 (CN)**
• **CAI, Qiujing
Ningde, Fujian 352100 (CN)**
• **WANG, Yuan
Ningde, Fujian 352100 (CN)**
• **HAN, Wucun
Ningde, Fujian 352100 (CN)**
• **WANG, Yuanxin
Ningde, Fujian 352100 (CN)**

(74) Representative: **Rowlands, Stuart Michael et al
Maucher Jenkins
Seventh Floor Offices
Artillery House
11-19 Artillery Row
London SW1P 1RT (GB)**

(54) **ELECTRODE SHEET BREAKAGE DETECTION METHOD AND APPARATUS, ELECTRONIC
DEVICE, AND STORAGE MEDIUM**

(57)    The present application discloses an electrode sheet breakage detection method and apparatus, an electronic device, and a storage medium. The method comprises: obtaining breakage detection information; and according to the breakage detection information, determining whether a battery electrode sheet is broken, wherein the breakage detection information comprises speed information of an electrode sheet pressing roller. A novel electrode sheet breakage detection method is provided, and the speed information of the electrode sheet pressing roller can be acquired and fed back in real time, such that the real-time detection of the breakage can be realized, thereby improving the real-time performance of the breakage detection and decreasing the scrap amount of an electrode sheet flying belt.

```
┌─────────────────────────────────────────┐
│ Acquiring breakage detection information, │  S100
│ the breakage detection information        │
│ including speed information of a plate    │
│ press roller                              │
└─────────────────────────────────────────┘
                    │
                    ▼
┌─────────────────────────────────────────┐
│ Determining, according to the breakage    │  S110
│ detection information, whether a breakage  │
│ occurs in a battery plate                 │
└─────────────────────────────────────────┘
```

FIG. 1

EP 4 506 077 A1

## Description

## TECHNICAL FIELD

The present application relates to the technical field of batteries, in particular to a plate breakage detection method and apparatus, an electronic device and a storage medium.

## BACKGROUND

At present, the breakage detection of a battery plate generally adopts a tension sensor to detect tension data of a plate, and then the detected tension data of the plate is compared with a set threshold to determine whether the breakage occurs or not. However, due to the limitation of the position of tension sensor and the detection time, the detection of plate breakage lags behind, which leads to the batch scrapping of the plate flying belt.

## SUMMARY

In view of the above problems, the present application provides a plate breakage detection method and apparatus, an electronic device and a storage medium, which can solve the problem of batch scrapping of the plate flying belt due to the detection lag of a traditional tension sensor.

According to a first aspect, the present application provides a plate breakage detection method, which includes: acquiring breakage detection information; and determining, according to the breakage detection information, whether a breakage occurs in a battery plate, wherein the breakage detection information includes speed information of a plate press roller.

In the technical solution of embodiments of the present application, the solution determines whether the breakage occurs in the battery plate according to the speed information of the plate press roller in the breakage detection information. When the breakage occurs in the plate rolling process, the friction force between the plate press roller and the plate is reduced, resulting in a certain change difference between the speed information of the plate press roller under the condition that the breakage occurs and the condition that the breakage does not occur. Therefore, whether the breakage occurs in the plate can be judged according to whether the speed information of the plate press roller has the change difference, thereby providing a novel mode of detecting plate breakage, and the speed information of the plate press roller can be collected and fed back in real time, thus realizing the real-time detection of the breakage, thereby improving the real-time detection of breakage and reducing the amount of scrapped plate flying belts.

In some embodiments, the determining, according to the breakage detection information, whether a breakage occurs in a battery plate includes: determining, according to the speed information of the plate press roller, a speed trend of the plate press roller; and determining that the breakage occurs in the battery plate when the speed trend satisfies a preset trend. In the embodiments, the speed trend of the plate press roller is determined first according to the speed information of the plate press roller, and when the speed trend satisfies the preset trend, it is determined that the breakage occurs in the battery plate, then the plate breakage is detected accurately in real time according to the speed trend of the plate press roller, thereby improving the real-time detection of breakage and reducing the amount of scrapped plate flying belts.

In some embodiments, the determining, according to the breakage detection information, whether a breakage occurs in a battery plate includes: determining a speed standard deviation according to the speed information; and detecting the breakage of the battery plate according to the speed standard deviation.

In some embodiments, the detecting the breakage of the battery plate according to the speed standard deviation includes: determining that the breakage occurs in the battery plate when the speed standard deviation is greater than or equal to a preset speed standard deviation threshold.

In some embodiments, the detecting the breakage of the battery plate according to the speed standard deviation includes: determining that the breakage occurs in the battery plate when the speed standard deviation is greater than or equal to a preset speed standard deviation threshold and a duration where the speed standard deviation is greater than or equal to the preset speed standard deviation threshold is longer than a first preset duration. In the embodiments of the present application, the speed standard deviation is determined first according to the speed information of the plate press roller, then whether the breakage occurs in the battery plate is determined according to the speed standard deviation, and further by comparing the speed standard deviation with the preset speed standard deviation threshold or comparing the speed standard deviation with the preset speed standard deviation threshold and comparing a duration where the speed standard deviation is greater than or equal to the preset speed standard deviation threshold with the first preset duration, so as to detect the plate breakage in real time more accurately and reliably, thereby improving the real-time detection of breakage and reducing the amount of scrapped plate flying belts.

In some embodiments, the breakage detection information further includes tension information; the acquiring breakage detection information further includes: acquiring tension information of the battery plate; the determining, according to the breakage detection information, whether a breakage occurs in a battery plate includes: determining whether the breakage occurs in the battery plate according to the tension information and the speed information. In the embodiments of the present application, the battery plate breakage is detected by combining the tension information of the battery plate with the speed information of the plate press roller, so that the breakage of the battery plate is detected more accurately.

In some embodiments, the determining whether the breakage occurs in the battery plate according to the tension information and the speed information includes: determining an average tension value according to the tension information; determining a tension coefficient according to the average tension value and a target tension value; determining a speed standard deviation according to the speed information when the tension coefficient is greater than or equal to a preset tension coefficient threshold; and determining that the breakage occurs in the battery plate when the speed standard deviation is greater than or equal to a preset speed standard deviation threshold.

In some embodiments, following the determining a speed standard deviation according to the speed information, the method further includes: determining a tension standard deviation according to the tension information when the speed standard deviation is less than the preset speed standard deviation threshold; and determining that the breakage occurs in the battery plate when the tension standard deviation is greater than or equal to a preset tension standard deviation threshold.

In some embodiments, following the determining a tension coefficient according to the average tension value and a target tension value, the method further includes: determining that the breakage occurs in the battery plate when the tension coefficient is less than the preset tension coefficient threshold and a duration where the tension coefficient is less than the preset tension coefficient threshold is longer than a second preset duration. In the embodiments of the present application, a preliminary detection is performed on the plate breakage through the tension coefficient, the plate breakage is further detected by adopting the speed standard deviation under the condition that no plate breakage is detected, and then the plate breakage is more further detected by adopting the plate standard deviation under the condition that no plate breakage is detected on the basis of the standard deviation, thereby avoiding the false detection situation existing in a single breakage factor and improving the accuracy of detecting plate breakage.

In some embodiments, the tension information is obtained by collecting tension of the battery plate by a tension sensor in a preset collection time period.

In some embodiments, prior to the acquiring tension information of the battery plate, the method further includes: collecting a tension value of the battery plate in real time; and executing the acquiring tension information of the battery plate when the tension value collected in real time is greater than a target tension value.

In some embodiments, the speed information of the plate press roller is obtained by collecting a speed of the plate press roller in a preset collection time period.

In some embodiments, prior to acquiring the speed information of the battery plate press roller, the method further includes: collecting a speed of the plate press roller in real time; and executing the acquiring the speed information of the plate press roller when the speed of the plate press roller collected in real time satisfies a speed stationary condition and a duration where the speed satisfies the speed stationary condition is longer than a third preset duration. In the embodiments of the present application, the speed value of the plate press roller is collected in real time prior to acquiring the speed information of the plate press roller, and the acquiring the speed information of the plate press roller is executed when the speed value satisfies the speed stationary condition and a duration where the speed satisfies the speed stationary condition is longer than a third preset duration, so as to avoid the influence of normal acceleration and deceleration of the battery plate on the judgment and detection of the speed standard deviation during the roller pressing process, and improve the accuracy of detecting the plate breakage based on the speed standard deviation.

In some embodiments, breakage detection includes detection at a plurality of positions, and different detection positions correspond to different position identifications, and the method further includes: acquiring, after determining that the breakage occurs in the battery plate, a position identification of the breakage of the battery plate; identifying a shutdown operation execution instruction mapped by the position identification according to the position identification of the breakage; and executing a corresponding shutdown operation according to the identified shutdown operation execution instruction, wherein different position identifications map different shutdown operation execution instructions. In the solution of the embodiments of the present application, shutdown operations corresponding to different positions can be triggered based on breakages at different positions, thereby effectively reducing scrapping caused by failure of plate flying belts and reducing economic losses caused by breakages of plates.

According to a second aspect, the present application provides a plate breakage detection apparatus, which includes: an acquisition module for acquiring breakage detection information; and a determination module for determining whether a breakage occurs in a battery plate according to the breakage detection information, wherein the breakage detection information includes speed information of a plate press roller.

In the technical solution of embodiments of the present application, the solution determines whether the battery plate is broken according to the speed information of the plate press roller in the breakage detection information. When the breakage occurs in the plate rolling process, the friction force between the plate press roller and the plate is reduced, resulting in a certain change difference between the speed information of the plate press roller under the condition that the breakage occurs and the condition that the breakage does not occur. Therefore, whether the plate is broken can be judged according to the change difference of the speed information of the plate press roller, thereby providing a novel mode of the plate breakage detection, and the speed information of the plate press roller can be collected and fed back in real time, thus realizing the real-time detection of the breakage, thereby improving the real-time detection of breakage and reducing the amount of scrapped plate flying belts.

In some embodiments, the determination module is configured to determine a speed trend of the plate press roller according to the speed information of the plate press roller; and determining that the breakage occurs in the battery plate when the speed trend satisfies a preset trend.

In some embodiments, the determination module is further configured to determine a speed standard deviation according to the speed information; and detecting the breakage of the battery plate according to the speed standard deviation.

In some embodiments, the determination module is further configured to determine that the breakage occurs in the battery plate when the speed standard deviation is greater than or equal to a preset speed standard deviation threshold.

In some embodiments, the determination module is further configured to determine that the breakage occurs in the battery plate when the speed standard deviation is greater than or equal to a preset speed standard deviation threshold and a duration where the speed standard deviation is greater than or equal to the preset speed standard deviation threshold is longer than a first preset duration.

In some embodiments, the breakage detection information further includes tension information, the acquisition module is further used for acquiring tension information of the battery plate; and the determination module is further used for determining whether the breakage occurs in the battery plate according to the tension information and the speed information.

In some embodiments, the determination module is further configured to determine an average tension value according to the tension information; determining a tension coefficient according to the average tension value and a target tension value; determining a speed standard deviation according to the speed information when the tension coefficient is greater than or equal to a preset tension coefficient threshold; and determining that the breakage occurs in the battery plate when the speed standard deviation is greater than or equal to a preset speed standard deviation threshold.

In some embodiments, the determination module is further configured to determine a tension standard deviation according to the tension information when the speed standard deviation is less than the preset speed standard deviation threshold; and determining that the breakage occurs in battery plate when the tension standard deviation is greater than or equal to a preset tension standard deviation threshold.

In some embodiments, the determination module is further configured to determine that the breakage occurs in battery plate when the tension coefficient is less than the preset tension coefficient threshold and a duration where the tension coefficient is less than the preset tension coefficient threshold is longer than a second preset duration.

In some embodiments, the apparatus further includes a collection module for collecting a tension value of the battery plate in real time; and an execution module for executing the acquiring tension information of the battery plate when the tension value collected in real time is greater than a target tension value.

In some embodiments, the collection module is further used for collecting a speed of the plate press roller in real time; and the execution module is further used for executing acquiring the speed information of the plate press roller when the speed of the plate press roller collected in real time satisfies a speed stationary condition and a duration where the speed satisfies the speed stationary condition is longer than a third preset duration.

According to a third aspect, the present application provides an electronic device including a memory and a processor, the memory storing a computer program which, when executed by the processor, executes the method in the first aspect or in any of alternative implementations of the first aspect.

According to a fourth aspect, the present application provides a computer-readable storage medium having a computer program stored thereon, wherein the computer program, when executed by a processor, executes the method in the first aspect or in any of alternative implementations of the first aspect.

According to a fifth aspect, the present application provides a computer program product which, when running on a computer, causes the computer to execute the method in the first aspect or in any of alternative implementations of the first aspect.

The above description is only an overview of the technical solution of the present application. In order to more clearly understand the technical means of the present application, it can be practiced in accordance with the contents of the specification, and in order to make the above and other objects, features and advantages of the present application more apparent and easier to understand, the specific implementations of the present application is set forth below.

**BRIEF DESCRIPTION OF DRAWINGS**

By reading the following detailed description of exemplary embodiments, a person of ordinary skill in the art becomes clearly aware of various other advantages and benefits. The drawings are merely intended to illustrate the exemplary embodiments, but not intended to limit this application. Throughout the drawings, the same parts are denoted by the same reference signs. In the drawings:

FIG. 1 is a first flowchart of a breakage detection method provided by the present application;

FIG. 2 is a second flowchart of the breakage detection method provided by the present application;

FIG. 3 is an exemplary diagram of a speed test result when breakage occurs provided by the present application;

FIG. 4 is a third flowchart of the breakage detection method provided by the present application;

FIG. 5 is a fourth flowchart of the breakage detection method provided by the present application;

FIG. 6 is a fifth flowchart of the breakage detection method provided by the present application;

FIG. 7 is an exemplary diagram of a tension test result when the breakage occurs provided by the present application;

FIG. 8 is a sixth flowchart of the breakage detection method provided by the present application;

FIG. 9 is a schematic structural diagram of a breakage detection apparatus provided by the present application; and

FIG. 10 is a schematic structural diagram of an electronic device provided by the present application.

The reference signs in the specific implementations are as follows:
900-acquisition module; 910-determination module; 920-collection module; 930-execution module; 10-electronic device; 1001-processor; 1002-memory; 1003-communication bus.

## DETAILED DESCRIPTION OF EMBODIMENTS

Embodiments of the technical solution of the present application will be described in detail below with reference to the accompanying drawings. The following embodiments are only intended to more clearly illustrate the technical solutions of the present application and are therefore intended as examples only and are not intended to limit the scope of protection of the present application.

Unless otherwise defined, all technical and scientific terms used herein have the same meanings as are commonly understood by those skilled in the art of the present application. Terms used herein are for the purpose of describing specific embodiments only and are not intended to limit the present application. The terms "comprising" and "having" and any variations thereof in the specification and claims of the present application and the above description of the drawings are intended to cover non-exclusive inclusion.

In the description of the embodiments of the present application, the technical terms "first," "second" and the like are used only to distinguish different objects and cannot be understood to indicate or imply relative importance or to imply the number, specific order or primary and secondary relationship of the indicated technical features. In the description of the embodiments of the present application, "a plurality of" means more than two, unless expressly specified otherwise.

"Embodiments" referred to in the present application mean that a particular feature, structure, or characteristic described in connection with embodiments can be included in at least one embodiment of the present application. The presence of the phrase in various places in the specification does not necessarily mean the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of the association relationship of the associated objects, indicating that three relationships can exist, for example, A and/or B may indicate that A exists alone, A and B exist at the same time, and B exists alone. In addition, the character "/" herein generally means that the associated objects are in an "or" relationship.

In the description of the embodiments of the present application, "multiple" refers to more than two (including two). Likewise, "multiple groups" refers to more than two (including two) groups, and "multiple pieces" refers to more than two (including two) pieces.

In the description of the embodiments of the present application, orientation or positional relationships indicated by technical terms such as "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the drawings, for ease of description of the embodiments of the present application and simplification of the description only, and these terms do not indicate or imply that the apparatus or element referred to must have a specific orientation or be constructed and operated in a specific orientation, and therefore cannot be construed as limitations to the embodiments of the present application.

In the description of the embodiments of the present application, unless otherwise explicitly provided and limited, the technical terms such as "mount," "connect," "couple," and "fix" should be understood broadly, which, for example, may refer to a fixed connection, a detachable connection, or an integral connection; which may refer to a mechanical connection or an electrical connection; which may refer to a direct connection or an indirect connection via an intermediate medium; which may also refer to a communication between the insides of two elements, or an interaction relationship between two elements. To a person of normal skill in the art, specific meanings of the above terms in the embodiments of the present application may be construed as dependent on specific situations.

During the rolling process of a battery plate, due to the inconsistent speeds at the front and back ends of the plate, the tensile stress parallel to the moving direction of the plate caused by the action of tension swing rolls, and the shear stress caused by the inconsistence in the deviation correction displacement and the height on both sides of the rolls, the plates undergo elastic-plastic deformation, which reduces the flexibility of the plate and increases the risk of breakage. Especially, with the increase of compaction density and speed of the plate, the risk of breakage is further increased. Therefore, it is necessary to detect the breakage of battery plate during the rolling process of battery plate.

The inventor has noticed that at present, the breakage detection in the market usually identifies whether the breakage occurs by comparing the tension or by sensors, which has the problem of lag in time and space, resulting in batch scrapping of plate flying belts.

According to the inventor's research, it has been found that the moment that the battery plate breaks is not only reflected in the dramatic drop in tension to zero on the battery plate, but also in the speed information of a plate press roller. Specifically, after in-depth research, the inventor has found that the friction force between the plate press roller and the plate will decrease when the plate is broken, which leads to the change difference of the speed information of the plate press roller in the case of breakage and in the case of no breakage. Therefore, the plate breakage can be detected based on the change difference of the speed information of the plate press roller in the case of breakage and in the case of breakage.

On the basis of the above discovery, the inventor designs a plate breakage detection method and apparatus, an electronic device and a storage medium through in-depth research, where breakage detection information is acquired by collecting, and the breakage detection information includes speed information of a plate press roller, whether a breakage occurs in a battery plate is determined according to the breakage detection information, thereby proposing a novel breakage detection mode, and the speed information of the plate press roller can be collected and fed back in real time, which can achieve the real-time detection of the breakage, thereby the real-time detection of breakage and reducing the amount of scrapped plate flying belts.

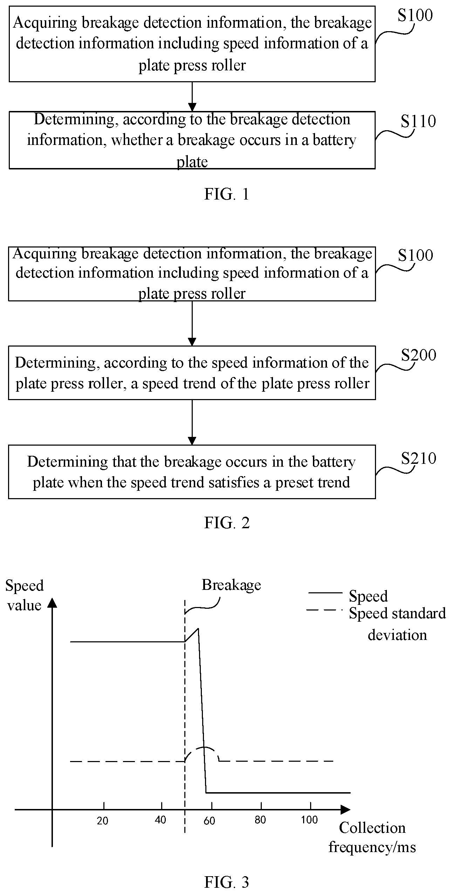

The present application provides a plate breakage detection method, which can be applied to a computing device including, but not limited to, a controller, a computer, an upper computer, a server, etc. As shown in FIG. 1, the plate breakage detection method can be implemented in the following ways, including:

step S100: acquiring breakage detection information, the breakage detection information including speed information of a plate press roller.

step S110: determining, according to the breakage detection information, whether a breakage occurs in a battery plate.

In the above implementations, the plate includes a battery plate, in particular, a lithium battery plate; the plate press roller is a force application device for rolling the battery plate in the rolling process of the battery plate, for example, a rolling round roller, etc.

The breakage detection information may include information on various factors that cause the breakage of the plate during the rolling process of the plate, for example, the breakage detection information may include the speed information of the plate press roller. The speed information of the plate press roller represents the speed information of a force application round roller in the rolling process of the battery plate. Specifically, the speed information may be a speed value of the force application round roller during the rolling of the battery plate. In this case, the speed information can be obtained by real-time collecting the speed of the force application roller by a speed sensor and transmitting it to the computing device. The speed information can also be a speed standard deviation of the force application round roller during the rolling process of the battery plate. In this case, the speed information can be obtained by real-time collecting the speed value of the force application round roller by the speed sensor and transmitting it to the computing device for calculation.

In addition to the speed information of the plate press roller, the breakage detection information can also contain the speed information of the plate press roller and tension information of the plate. The tension information of the plate indicates a tension value of the plate in the rolling process, and the tension information can be obtained by collecting the tension value by the tension sensor and transmitting it to the computing device.

As described above, when there is the plate breakage occurs in the plate rolling process, the friction force between the plate press roller and the plate decreases, which leads to a certain change difference between the speed information of the plate press roller in the case of breakage and in the case of no breakage. For example, the speed value of the plate press roller fluctuates in a certain value range in the case of no breakage, while in the case where the plate is broken, the speed value of the plate press roller rises slowly at first and then drops rapidly to 0; or, the speed standard deviation of the plate press roller shows a stable trend in a certain numerical range in the case of no breakage, while in the case of breakage, the speed standard deviation of the plate press roller rises slowly at first and then drops slowly to be stable. On this basis, this solution can determine whether the breakage occurs in the battery plate according to the change difference of the speed information of the plate press roller when the breakage occurs or not, that is, if the speed information of the plate press roller shows the change difference as described above, it indicates that the battery plate is broken.

According to the breakage detection method designed above, the solution determines whether the breakage occurs in the battery plate according to the speed information of the plate press roller in the breakage detection information. When the breakage occurs in the plate rolling process, the friction force between the plate press roller and the plate is reduced, resulting in a certain change difference between the speed information of the plate press roller under the condition that the breakage occurs and the condition that the breakage does not occur. Therefore, whether the breakage occurs in the plate can be judged according to whether the speed information of the plate press roller has the change difference, thereby providing a novel detection mode of plate breakage, and the speed information of the plate press roller can be collected and fed back in real time, thus realizing the real-time detection of the breakage, thereby improving the real-time detection of breakage and reducing the amount of scrapped plate flying belts.

According to some embodiments of the present application, as shown in FIG. 2, the aforementioned step S110 of determining, according to the breakage detection information, whether a breakage occurs in a battery plate can be implemented as follows:

step S200: determining, according to the speed information of the plate press roller. a speed trend of the plate press roller.

step S210: determining that the breakage occurs in the battery plate when the speed trend satisfies a preset trend.

In the above implementations, it is described above that the speed information of the plate press roller can be the speed value of the plate press roller. On this basis, it is implementable in this solution to collect the speed value of the plate press roller several times based on a preset collection time period, thereby obtaining a plurality of speed values of the plate press roller, for example, collecting the speed value of the plate press roller 100 times in a time period of 100 ms, thereby obtaining 100 speed values of the plate press roller. Of course, it is implementable in this solution to obtain a current speed value of the plate press roller through real-time collection, and then combine the current speed value with a historical speed value to form a plurality of speed values, the historical speed value can be a plurality of speed values collected in a preset historical time period, and the preset historical time period can be a time period of a preset length of time before the current time.

After obtaining a plurality of speed values of the plate press roller, the speed trend of the plate press roller in the preset collection period can be determined based on specific values of the plurality of speed values. The computing device can determine whether the breakage occurs in the battery plate according to whether the determined speed trend satisfies a speed value change trend of the plate press roller in the case of breakage, for example, if the speed trend conforms to the speed change trend of the plate press roller in the case of breakage, it is determined that the breakage occurs in the battery plate.

Specifically, as shown in FIG. 3 which is a schematic diagram of test results of a plate breakage of this solution, as can be seen from FIG. 3 that in the case of plate breakage, the speed value of the plate press roller first rises briefly and then drops sharply to zero. On this basis, in this solution, the speed value of the plate press roller is collected for many times in a preset collection time period to obtain multiple speed values of the plate press roller, and then it can be analyzed whether the current speed trend meets the change trend of first showing a short rise and then a sharp drop to 0 based on the collected multiple speed values. If the current speed trend meets the change trend, it is determined that the breakage occurs in the battery plate. If the current speed trend does not meet the change trend, it is continued to collect multiple speed values of the plate press roller for breakage detection.

In the embodiments of the present application, the speed trend of the plate press roller is determined first according to the speed information of the plate press roller, and when the speed trend satisfies the preset trend, it is determined that the breakage occurs in the battery plate, then the plate breakage is detected accurately in real time according to the speed trend of the plate press roller, thereby improving the real-time detection of breakage and reducing the amount of scrapped plate flying belts.

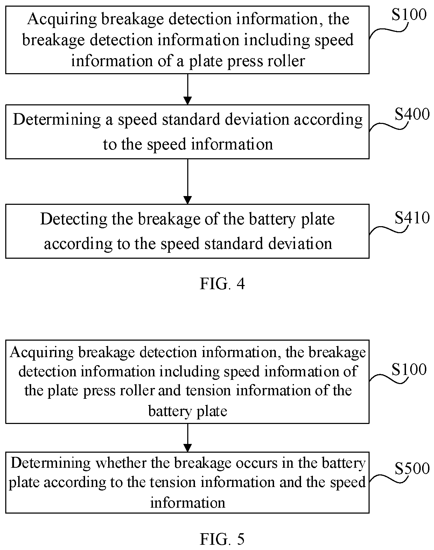

According to some embodiments of the present application, as another possible implementation, in addition to detecting the breakage of the plate by the speed trend mentioned above, as shown in FIG. 4, the aforementioned step S110 of determining, according to the breakage detection information, whether a breakage occurs in a battery plate can further be implemented as follows:

step S400: determining a speed standard deviation according to the speed information.

step S410: detecting the breakage of the battery plate according to the speed standard deviation.

In the above-described implementations, it is described previously that the speed information of the plate press roller may be a speed standard deviation which may be calculated based on a plurality of speed values. The plurality of speed values can be obtained by collecting the speed of the plate press roller for many times in a preset collection time period. The plurality of speed values can also be obtained by real-time collection of the current speed value of the plate press roller, and then combining the current speed value and the historical speed value to form a plurality of speed values.

Specifically, the computing device may first calculate an average speed value based on a plurality of speed values, then calculate a variance based on a square of the difference between each average speed value and the average speed value, and finally calculate an arithmetic square root of the variance, i.e., obtain the speed standard deviation, which may characterize the degree of dispersion of the speed values of the plate press roller during the rolling process.

As described above, the speed standard deviation of the plate press roller exhibits a smooth - shortly rising - shortly falling - smooth trend in the case of breakage. As a possible implementation, it is implementable in the solution to calculate a plurality of speed standard deviations for a certain length of time, and then compare the trend of the plurality of speed standard deviations with the trend of the speed standard deviation of the plate press roller in the case of breakage to determine whether the breakage occurs in the battery plate.

As another possible implementation, since the speed standard deviation of the plate press roller exhibits a smooth - shortly rising - shortly falling - smooth trend in the case of breakage, the speed standard deviation is stable in a numerical range in the case of no breakage. Therefore, it is implementable in the solution to set a preset speed standard deviation threshold in advance based on the short rising trend of speed standard deviation in the case of breakage, and the preset speed standard deviation threshold can be greater than the numerical range of stable speed standard deviation in the case of no breakage. On this basis, it is implementable in the solution to calculate a current speed standard deviation based on a plurality of speed values collected in real time, and then compare the calculated current speed standard deviation with the preset speed standard deviation threshold. If the current speed standard deviation is greater than or equal to the preset standard deviation threshold, it indicates that the breakage occurs in the battery plate. If the current speed standard deviation is less than the preset standard deviation threshold, it indicates that the breakage has not occurred in the battery plate. On the basis of determining that there is no breakage, it is implementable in the solution to collect multiple speed values again after a certain time interval and calculate a speed standard deviation, so as to compare with the preset speed standard deviation threshold again and continue to detect whether the breakage occurs in the plate. Since it is implementable in this implementation to detect the breakage in real time based on the current speed standard deviation calculated from a plurality of speed values collected in real time, the real-time detection of breakage can be improved in this implementation.

Specifically, it can be seen from FIG. 3 that the speed standard deviation of the plate press roller is stable in a numerical range under the condition that the plate is not broken. Under the condition that the plate is broken, the speed standard deviation of the plate press roller exhibits a rising trend and a falling trend after reaching the vertex, and finally tends to be stable. On this basis, any value in the process of rising of the speed standard deviation in FIG. 3 of this solution can be set as the preset speed standard deviation threshold, so as to compare the currently calculated speed standard deviation with the preset speed standard deviation threshold. If the currently calculated speed standard deviation is greater than the preset speed standard deviation threshold, it is determined that the breakage occurs in the battery plate.

As a possible implementation, in order to avoid breakage detection errors caused by interference or calculation errors, it is implementable in this solution to determine that the breakage occurs in the battery plate only when the persistence of speed standard deviation is greater than the preset speed standard deviation threshold. Specifically, referring to FIG. 3, it can be seen that the speed standard deviation in the case of breakage is greater than the stable value range in the case of no breakage, and the speed standard deviation may show a continuous rising trend after being greater than the value range. Therefore, it is implementable in the solution to determine whether a duration where the speed standard deviation is greater than or equal to the preset speed standard deviation threshold is greater than a first preset duration when the speed standard deviation is greater than or equal to the preset speed standard deviation threshold. If the duration where the speed standard deviation is greater than or equal to the preset speed standard deviation threshold is greater than the first preset duration, it is finally determined that the breakage occurs in the battery plate, thereby improving the reliability of battery plate breakage detection.

In the embodiments of the present application, the speed standard deviation is calculated according to a plurality of speed information of the plate press roller collected in real time, and then the speed standard deviation is compared with the preset speed standard deviation threshold to achieve the detection of the battery plate breakage, so as to improve the real-time detection of the breakage, and further the duration where the speed standard deviation is greater than the preset speed standard deviation threshold is compared with the first preset duration to avoid the error detection of the breakage caused by interference, so as to carry out the real-time detection of the plate breakage more accurately and reliably and reduce the amount of scrapped plate flying belts.

According to some embodiments of the present application, the aforementioned breakage detection information may include not only the speed information of the plate press roller, but also the tension information of the battery plate. On this basis, the aforementioned step S110 of determining, according to the breakage detection information, whether a breakage occurs in a battery plate, as shown in FIG. 5, may specifically include the following steps:

step S500: determining whether the breakage occurs in the battery plate according to the tension information and the speed information.

In the above implementations, it is described above that the breakage detection information may also include tension information of the battery plate, the tension information of the battery plate may be a tension value of the battery plate, and the tension value of the battery plate may be collected by a tension sensor and transmitted to a computing device. The tension information of the battery plate can also be an average tension value of the battery plate, and the average tension value of the battery plate can be obtained by collecting a plurality of tension values through the tension sensor and transmitting them to the computing device for calculation. The tension information of the battery plate can also be a tension standard deviation of the battery plate, which can be obtained by transmitting a plurality of tension values collected by the tension sensor to the computing device for calculation.

Since the battery plate shows abnormalities not only in the speed information of the plate press roller but also in the tension information of the battery plate in the case of breakage, it is implementable in this solution to combine the tension information of the plate and the speed information of the plate press roller to detect whether the breakage occurs in the battery plate. What needs to be explained here is that when the tension information of the plate and the speed information of the plate press roller are used to detect the breakage of the battery plate together, the tension information of the plate and the speed information of the plate press roller need to be collected in the same collection time period.

Specifically, in the case of detecting the breakage using both the tension information and the speed information, it is implementable in the solution to first determine whether the tension information of the plate shows the difference in the case of breakage based on the collected tension information of the plate, and if the tension information shows the difference, it is determined that the breakage occurs in the battery plate. If the tension information does not show a difference in the case of breakage, the breakage detection of the battery plate is further carried out based on the collected speed information of the plate press roller, the method of detecting the breakage of the battery plate using the speed information of the plate press roller is the same as the method as described above, and will not be repeated here. What needs to be explained here is that in the case that the tension information of the plate shows the difference in the case of breakage, it is also implementable in this solution to detect the breakage of the battery plate based on the speed information of the plate press roller, thus avoiding the detection error of using the tension information.

Also, in addition to the above-mentioned method of detecting the breakage first based on the tension information of the plate and then detecting the breakage based on the speed information of the plate press roller, it is also implementable in this solution to adopt the method of detecting the breakage first based on the speed information of the plate press roller and then detecting the breakage based on the tension information of the plate. It is also possible to detect the breakage simultaneously based on the tension information of the plate and the speed information of the plate press roller.

In addition, in order to make the collected tension information characterize the tension of the plate under the condition of stable movement in the rolling process, it is also implementable in this solution to collect the tension value of the battery plate in real time before obtaining the tension information of the battery plate, and only execute the step of acquiring the tension information of the battery plate when the tension value collected in real time is greater than a target tension value. For example, if the tension value of the battery plate collected in real time is F and the target tension value is f, when F > f, it is implementable in this solution to collect the tension of the battery plate by the preset collection frequency, so as to obtain the tension information of the battery plate.

According to the embodiments, the solution combines the tension information of the battery plate and the speed information of the plate press roller to jointly detect the breakage of the battery plate, so that the breakage detection of the battery plate is more accurate and reliable.

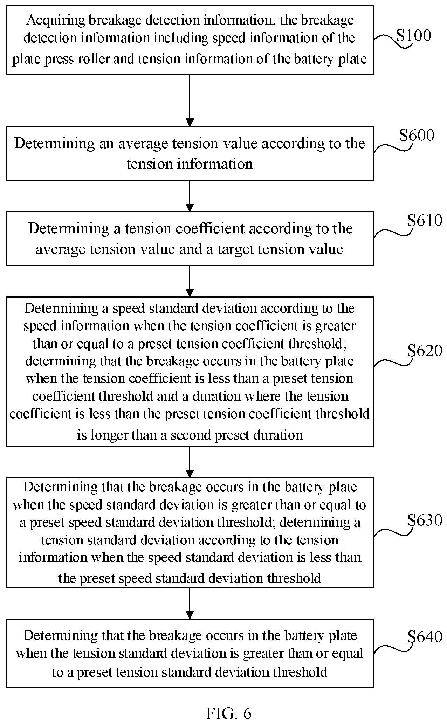

According to some embodiments of the present application, the detailed implementation process is described below by first detecting the breakage based on the tension information of the plate and then detecting the breakage based on the speed information of the plate press roller, as shown in FIG. 6, including:

step S600: determining an average tension value according to the tension information.

step S610: determining a tension coefficient according to the average tension value and a target tension value.

step S620: determining a speed standard deviation according to the speed information when the tension coefficient is greater than or equal to a preset tension coefficient threshold; and determining that the breakage occurs in the battery plate when the tension coefficient is less than the preset tension coefficient threshold and a duration where the tension coefficient is less than the preset tension coefficient threshold is longer than a second preset duration.

step S630: determining that the breakage occurs in the battery plate when the speed standard deviation is greater than or equal to a preset speed standard deviation threshold; and determining a tension standard deviation according to the tension information when the speed standard deviation is less than the preset speed standard deviation threshold.

step S640: determining that the breakage occurs in the battery plate when the tension standard deviation is greater than or equal to the preset tension standard deviation threshold.

In the above implementations, in particular, the computing device can calculate an average value of a plurality of tension values based on a plurality of tension values transmitted by the tension sensor to obtain an average tension value, the plurality of tension values transmitted by the tension sensor can be obtained by collecting in a preset collection time period, or the transmitted plurality of tension values can be obtained based on a combination of the tension values collected in real time and a plurality of historical tension values.

After calculating the average tension value, it is implementable in this solution to determine the tension coefficient based on the average tension value and the target tension value, where the target tension value may characterize a qualified tension value, which can be adaptively set according to experience. Specifically, it is implementable in this solution to calculate a ratio of the average tension value to the target tension value to obtain the tension coefficient. For example, if the average tension value is $\overline{F}$, the target tension value is f, and the tension coefficient is K, then the tension coefficient can be calculated by the formula $K=\overline{F}/f$.

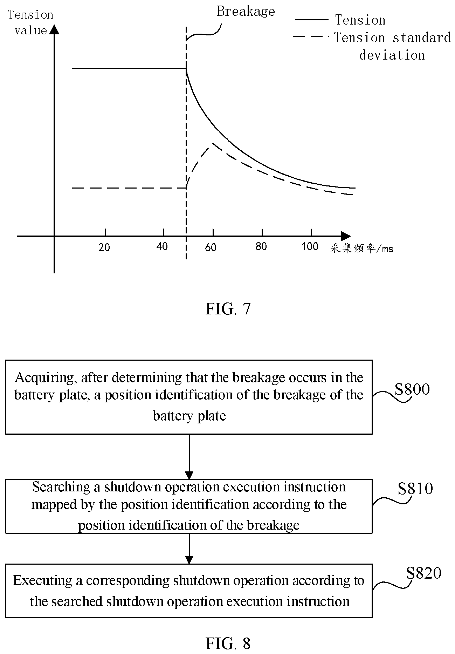

After the tension coefficient K is obtained, it is implementable in this solution to compare the tension coefficient K with the preset tension coefficient threshold, the preset tension coefficient threshold can be adaptively set according to experience. For example, taking the diagram of test results shown in FIG. 7 as an example, it can be seen from FIG. 7 that the tension of the plate is basically maintained within a stable value range in the case where the plate is not broken. In the case of plate breakage, the tension of plate drops sharply to 0. Therefore, it is implementable in this solution to determine the preset tension coefficient threshold based on the value range of plate stability, so as to effectively detect whether the plate is broken or not based on the tension coefficient. When the tension coefficient is less than the preset tension coefficient threshold, it indicates that the current tension of the battery plate changes sharply. In order to avoid the false detection of breakage caused by interference, in this solution, whether the duration where the tension coefficient is less than the preset tension coefficient threshold is greater than the second preset duration is determined after the tension coefficient is less than the preset tension coefficient threshold, and if the duration is greater than the second preset duration, it is determined that the battery plate is broken.

If the tension coefficient is greater than or equal to the preset tension coefficient threshold, it indicates that the plate is determined to have no breakage based on the tension coefficient. In order to eliminate the determination error existing in the tension coefficient, in this solution, the plate breakage is further detected based on the speed standard deviation of the plate press roller, so as to determine whether the plate is broken. The specific method of determining whether the plate is broken or not based on the speed standard deviation of the plate press roller is the same as that described above, so it will not be repeated here.

If it is determined that the plate is not broken based on the speed standard deviation of the plate press roller, in order to eliminate the errors of detecting the breakage based on both the tension coefficient and the speed standard deviation, it is implementable in this solution to calculate the tension standard deviation based on the tension information. Specifically, it is implementable in this solution to calculate the standard deviation corresponding to a plurality of tension values based on a plurality of tension values transmitted by the tension sensor, thereby obtaining the tension standard deviation.

Since the differences of variation of the tension standard deviation and the speed standard deviation of the plate press roller are similar, that is, in the case that no breakage occurs in the plate, the tension standard deviation is stable in a numerical interval, while in the case where the breakage occurs in the plate, the tension standard deviation shows a short-term rising trend from stability, then from rising to falling, and finally stabilizes in a numerical interval. Therefore, it is implementable in this solution to take any value greater than the numerical interval in the rising process as the preset tension standard deviation threshold, and then compare the tension standard deviation with the preset tension standard deviation threshold. When the tension standard deviation is greater than or equal to the preset tension standard deviation threshold, it indicates that there is a trend of tension standard deviation from stable to transient rising, so that it is determined that the plate is broken.

In the embodiments of the present application, a preliminary detection is performed on the plate breakage through the tension coefficient, the plate breakage is further detected by adopting the speed standard deviation under the condition that no plate breakage is detected, and then the plate breakage is more further detected by adopting the plate standard deviation under the condition that no plate breakage is detected on the basis of the standard deviation, thereby avoiding the false detection situation existing in a single breakage factor and improving the detection accuracy of the plate breakage.

According to some embodiments of the present application, the normal acceleration and deceleration of the battery plate on a conveyor belt during the rolling process may cause the speed information of the plate pressure roller to be unstable, which affects the detection of the plate breakage. Therefore, before acquiring the speed information of the plate press roller, it is implementable in this solution to collect the speed value of the plate press roller in real time, and when the speed value of the plate press roller satisfies the speed stationary condition and a duration where the speed value satisfies the speed stationary condition is longer than a third preset duration, the step of acquiring the speed information of the plate press roller is executed. For example, if the speed value of the plate press roller satisfies the speed stationary condition and the stabilization lasts for 10s, the step of acquiring the speed information of the plate press roller is executed. Specifically, the speed stationary condition is as follows:

$$V_0 \geq N。$$

$$|V_t - V_0| \leq M。$$

where N and M respectively represent set speed thresholds, which are constants; $V_0$ represents a real-time speed of plate press roller; and $V_t$ represents a target speed of the plate press roller.

In the above implementations, in this solution, the speed value of the plate press roller is collected in real time before acquiring the speed information of the plate press roller, and the step of acquiring the speed information of the plate press roller is executed when the speed value satisfies the speed stationary condition and a duration where the speed satisfies the speed stationary condition is longer than a third preset duration, so as to prevent the normal acceleration and deceleration of the battery plate during the roller pressing process from causing the unstable speed information of the plate roller press, thereby affecting the effect of plate breakage detection, and thus improving the accuracy of plate breakage detection based on the speed information of the plate press roller.

According to some embodiments of the present application, it is implementable in this solution to set up detection positions at a plurality of places during the plate rolling process, thereby detecting different detection positions during the plate rolling process, for example, the detection positions may include an inlet and an outlet of the plate press roller etc. On this basis, as shown in FIG. 8, the solution may also be implemented by the following ways:

step S800: acquiring, after determining that the breakage occurs in the battery plate, a position identification of the breakage of the battery plate.

step S810: searching a shutdown operation execution instruction mapped by the position identification according to the position identification of the breakage.

step S820: executing a corresponding shutdown operation according to the searched shutdown operation execution instruction.

In the above-mentioned implementation, in this solution, each detection position can be configured with a corresponding position identification in advance, the position identification corresponding to different detection positions is different, and each position identification has a corresponding mapped shutdown operation execution instruction, which is used for executing the corresponding shutdown operation, and the shutdown operation execution instruction mapped by different position identification is different. For example, in this solution, an identification "Position A" can be set for the inlet of the plate press roller in advance and an identification "Position B" can be set for the outlet of the plate press roller in advance, and the identification "Position A" is mapped with the shutdown operation execution instruction A1. The "Position B" is mapped with the shutdown operation execution instruction B1.

On this basis, when the battery plate is determined to be broken according to the plate breakage detection method described above, it is implementable in this solution to firstly determine the position identification corresponding to the position where the battery plate is broken, then search for the mapped shutdown operation execution instruction based on the position identification of the breakage position, and finally execute the corresponding shutdown operation according to the searched shutdown operation execution instruction.

In the above implementation, it is implementable in this solution to set up breakage detection at a plurality of positions of the plate rolling process, so as to trigger shutdown operations corresponding to different positions based on breakages at different positions, thereby effectively reducing scrapping caused by failure of plate flying belts and reducing economic losses caused by breakage of plate.

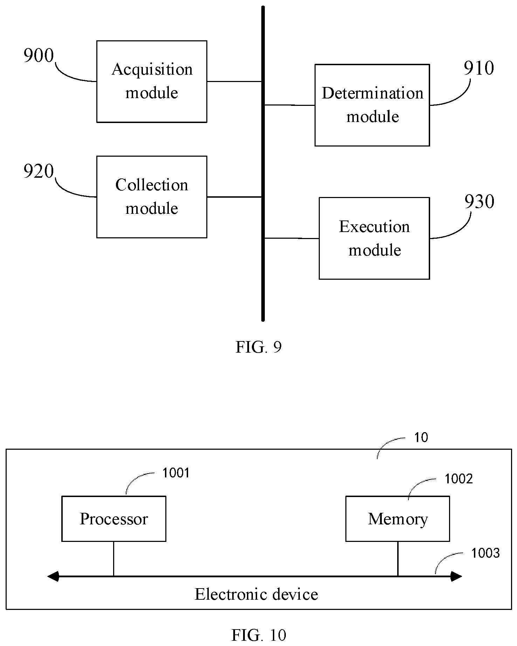

FIG. 9 shows a schematic structural block diagram of a plate breakage detection apparatus provided by the present application, which is understood to be capable of performing the steps involved in the aforementioned method corresponding to the embodiments of the method executed in FIGS. 1 to 8. The specific functions of the apparatus can be described above, and detailed description is suitably omitted herein to avoid repetition. The apparatus includes at least one software function module which can be stored in a memory in the form of software or firmware or solidified in an operating system (OS) of the apparatus. Specifically, the apparatus includes an acquisition module 900 and a determination module 910. The acquisition module 900 is used for acquiring breakage detection information; and the determination module 910 is used for determining whether a breakage occurs in a battery plate according to the breakage detection information. The breakage detection information includes speed information of a plate press roller.

In the technical solution of the embodiments of the present application, the solution determines whether the breakage occurs in the battery plate according to the speed information of the plate press roller in the breakage detection information. When the breakage occurs in the plate rolling process, the friction force between the plate press roller and the plate is reduced, resulting in a certain change difference between the speed information of the plate press roller under the condition that the breakage occurs and the condition that the breakage does not occur. Therefore, whether the breakage occurs in the plate can be judged according to whether of the speed information of the plate press roller has the change difference, thereby providing a novel detection mode of plate breakage, and the speed information of the plate press roller can be collected and fed back in real time, thus realizing the real-time detection of the breakage, thereby improving the real-time detection of breakage and reducing the amount of scrapped plate flying belts.

According to some embodiments of the present application, the determination module 910 is configured to determine a speed trend of the plate press roller according to the speed information of the plate press roller; determining that the breakage occurs in the battery plate when the speed trend satisfies a preset trend.

According to some embodiments of the present application, the determination module 910 is further configured to determine a speed standard deviation according to the speed information; and detecting the breakage of the battery plate according to the speed standard deviation.

According to some embodiments of the present application, the determination module 910 is further configured to determine that the breakage occurs in the battery plate when the speed standard deviation is greater than or equal to a preset speed standard deviation threshold.

According to some embodiments of the present application, the determination module 910 is further configured to determine that the breakage occurs in the battery plate when the speed standard deviation is greater than or equal to a preset speed standard deviation threshold and a duration where the speed standard deviation is greater than or equal to the preset speed standard deviation threshold is longer than a first preset duration.

According to some embodiments of the present application, the breakage detection information further includes tension information, the acquisition module 900 is further used for acquiring tension information of the battery plate; and the determination module 910 is further used for determining whether the breakage occurs in the battery plate according to the tension information and the speed information.

According to some embodiments of the present application, the determination module 910 is further configured to determine an average tension value according to the tension information; determining a tension coefficient according to the average tension value and a target tension value; determining a speed standard deviation according to the speed information when the tension coefficient is greater than or equal to a preset tension coefficient threshold; and determining that the breakage occurs in the battery plate when the speed standard deviation is greater than or equal to a preset speed standard deviation threshold.

According to some embodiments of the present application, the determination module 910 is further configured to determine a tension standard deviation according to tension information when the speed standard deviation is less than the preset speed standard deviation threshold; and determining that the breakage occurs in battery plate when the tension standard deviation is greater than or equal to a preset tension standard deviation threshold.

According to some embodiments of the present application, the determination module 910 is further configured to determine that the breakage occurs in battery plate when the tension coefficient is less than a preset tension coefficient threshold and a duration where the tension coefficient is less than the preset tension coefficient threshold is longer than a second preset duration.

According to some embodiments of the present application, the apparatus further includes a collection module 920 for collecting a tension value of the battery plate in real time; and an execution module 930 for executing the step of acquiring a plurality of pieces of tension information of the battery plate when the tension value collected in real time is greater than a target tension value.

According to some embodiments of the present application, the collection module 920 is further used for collecting a speed of a plate press roller in real time; and the execution module 930 is also used for executing the step of acquiring a plurality pieces of speed information of the battery plate press roller when the speed of the plate press roller collected in real time satisfies a speed stationary condition.

According to some embodiments of the present application, as shown in FIG. 10, the present application provides an electronic device 10, which includes a processor 1001 and a memory 1002. The processor 1001 and the memory 1002 are interconnected and in communication with each other via a communication bus 1003 and/or other form of connection mechanism (not shown), the memory 1002 stores a computer program executable by the processor 1001, the computer program is executed by the processor 1001 when a computing device is running to execute a method executed by an external computer in any alternative implementation, such as steps S100 to S110: acquiring breakage detection information, the breakage detection information including speed information of a plate press roller; and determining whether a breakage occurs in a battery plate according to the breakage detection information.

The present application provides a computer-readable storage medium having a computer program stored thereon, and the computer program executes the method of any of the aforementioned alternative implementations when run by a processor.

The storage medium can be implemented by any type of volatile or non-volatile storage device or a combination thereof, such as Static Random Access Memory (SRAM), Electrically Erasable Programmable Read-Only Memory (EEPROM), Erasable Programmable Read Only Memory (EPROM), Programmable Read-Only Memory (PROM), Read-Only Memory (ROM), magnetic memory, flash memory, magnetic disk or optical disk.

The present application provides a computer program product that, when run on a computer, causes the computer to perform the method of any alternative implementation.

Finally, it should be noted that the above embodiments are only used to illustrate the technical solution of the present application, not to limit it. Although the present application has been described in detail with reference to the foregoing embodiments, it should be understood by those of ordinary skill in the art that the technical solution described in the foregoing embodiments can still be modified or some or all of the technical features thereof can be equivalently replaced. However, these modifications or substitutions do not depart the essence of the corresponding technical solution from the scope of the technical solution of each embodiment of the present application, and should fall within the scope of the claims and specification of the present application. In particular, the various technical features mentioned in the various embodiments may be combined in any manner so long as there is no structural conflict. The present application is not limited to the specific embodiments disclosed herein but includes all technical solutions falling within the scope of the claims.

## Claims

1. A plate breakage detection method, **characterized by** comprising:

   acquiring breakage detection information; and
   determining, according to the breakage detection information, whether a breakage occurs in a battery plate,

   wherein the breakage detection information comprises speed information of a plate press roller.

2. The method according to claim 1, **characterized in that** the determining, according to the breakage detection information, whether a breakage occurs in a battery plate comprises:

   determining, according to the speed information of the plate press roller, a speed trend of the plate press roller; and
   determining that the breakage occurs in the battery plate when the speed trend satisfies a preset trend.

3. The method according to claim 1, **characterized in that** the determining, according to the breakage detection information, whether a breakage occurs in a battery plate comprises:

   determining a speed standard deviation according to the speed information; and
   detecting the breakage of the battery plate according to the speed standard deviation.

4. The method according to claim 3, **characterized in that** the detecting the breakage of the battery plate according to the speed standard deviation comprises:
   determining that the breakage occurs in the battery plate when the speed standard deviation is greater than or equal to a preset speed standard deviation threshold.

5. The method according to claim 3, **characterized in that** the detecting the breakage of the battery plate according to the speed standard deviation comprises:
   determining that the breakage occurs in the battery plate when the speed standard deviation is greater than or equal to a preset speed standard deviation threshold and a duration where the speed standard deviation is greater than or equal to the preset speed standard deviation threshold is longer than a first preset duration.

6. The method according to claim 1, **characterized in that** the breakage detection information further comprises tension information;

   the acquiring breakage detection information further comprises: acquiring tension information of the battery plate;
   the determining, according to the breakage detection information, whether a breakage occurs in a battery plate comprises: determining whether the breakage occurs in the battery plate according to the tension information and the speed information.

7. The method according to claim 6, **characterized in that** the determining whether the breakage occurs in the battery plate according to the tension information and the speed information comprises:

determining an average tension value according to the tension information;
determining a tension coefficient according to the average tension value and a target tension value;
determining a speed standard deviation according to the speed information when the tension coefficient is greater than or equal to a preset tension coefficient threshold; and
determining that the breakage occurs in the battery plate when the speed standard deviation is greater than or equal to a preset speed standard deviation threshold.

8. The method according to claim 7, **characterized in that** following the determining a speed standard deviation according to the speed information, the method further comprises:

determining a tension standard deviation according to the tension information when the speed standard deviation is less than the preset speed standard deviation threshold; and
determining that the breakage occurs in the battery plate when the tension standard deviation is greater than or equal to a preset tension standard deviation threshold.

9. The method according to claim 7, **characterized in that** following the determining a tension coefficient according to the average tension value and a target tension value, the method further comprises:
determining that the breakage occurs in the battery plate when the tension coefficient is less than the preset tension coefficient threshold and a duration where the tension coefficient is less than the preset tension coefficient threshold is longer than a second preset duration.

10. The method according to claim 6, **characterized in that** the tension information is obtained by collecting tension of the battery plate by a tension sensor in a preset collection time period.

11. The method according to claim 6, **characterized in that** prior to the acquiring tension information of the battery plate, the method further comprises:

collecting a tension value of the battery plate in real time; and

executing the acquiring tension information of the battery plate when the tension value collected in real time is greater than a target tension value.

12. The method according to claim 1, **characterized in that** the speed information of the plate press roller is obtained by collecting a speed of the plate press roller in a preset collection time period.

13. The method according to claim 1, **characterized in that** prior to acquiring the speed information of the plate press roller, the method further comprises:

collecting a speed of the plate press roller in real time; and
executing the acquiring the speed information of the plate press roller when the speed of the plate press roller collected in real time satisfies a speed stationary condition and a duration where the speed satisfies the speed stationary condition is longer than a third preset duration.

14. The method according to any one of claims 1-13, **characterized in that** breakage detection comprises detection at a plurality of positions, and different detection positions correspond to different position identifications, and the method further comprises:

acquiring, after determining that the breakage occurs in the battery plate, a position identification of the breakage of the battery plate;
searching a shutdown operation execution instruction mapped by the position identification according to the position identification of the breakage; and
executing a corresponding shutdown operation according to the searched shutdown operation execution instruction,
wherein different position identifications map different shutdown operation execution instructions.

15. A plate breakage detection apparatus **characterized in** comprising an acquisition module and a determination module;

wherein the acquisition module is configured to acquire breakage detection information; and
the determination module is configured to determine whether a breakage occurs in a battery plate according to the breakage detection information,
wherein the breakage detection information comprises speed information of a plate press roller.

**16.** An electronic device comprising a memory and a processor, **characterized in that** the memory stores a computer program which, when executed by the processor, implements the method of any one of claims 1 to 14.

**17.** A computer-readable storage medium having a computer program stored thereon, **characterized in that** the computer program, when executed by a processor, implements the method of any one of claims 1 to 14.

**18.** A computer program product, **characterized by** comprising computer program instructions which, when being read and run by a processor, executes the method of any one of claims 1 to 14.

Acquiring breakage detection information, the breakage detection information including speed information of a plate press roller    S100

Determining, according to the breakage detection information, whether a breakage occurs in a battery plate    S110

FIG. 1

Acquiring breakage detection information, the breakage detection information including speed information of a plate press roller    S100

Determining, according to the speed information of the plate press roller, a speed trend of the plate press roller    S200

Determining that the breakage occurs in the battery plate when the speed trend satisfies a preset trend    S210

FIG. 2

FIG. 3

Acquiring breakage detection information, the breakage detection information including speed information of a plate press roller

S100

Determining a speed standard deviation according to the speed information

S400

Detecting the breakage of the battery plate according to the speed standard deviation

S410

FIG. 4

Acquiring breakage detection information, the breakage detection information including speed information of the plate press roller and tension information of the battery plate

S100

Determining whether the breakage occurs in the battery plate according to the tension information and the speed information

S500

FIG. 5

Acquiring breakage detection information, the breakage detection information including speed information of the plate press roller and tension information of the battery plate ∽ S100

Determining an average tension value according to the tension information ∽ S600

Determining a tension coefficient according to the average tension value and a target tension value ∽ S610

Determining a speed standard deviation according to the speed information when the tension coefficient is greater than or equal to a preset tension coefficient threshold; determining that the breakage occurs in the battery plate when the tension coefficient is less than a preset tension coefficient threshold and a duration where the tension coefficient is less than the preset tension coefficient threshold is longer than a second preset duration ∽ S620

Determining that the breakage occurs in the battery plate when the speed standard deviation is greater than or equal to a preset speed standard deviation threshold; determining a tension standard deviation according to the tension information when the speed standard deviation is less than the preset speed standard deviation threshold ∽ S630

Determining that the breakage occurs in the battery plate when the tension standard deviation is greater than or equal to a preset tension standard deviation threshold ∽ S640

FIG. 6

Tension value

Breakage

———— Tension
— — — Tension standard deviation

20    40    60    80    100    采集频率/ms

FIG. 7

Acquiring, after determining that the breakage occurs in the battery plate, a position identification of the breakage of the battery plate    S800

Searching a shutdown operation execution instruction mapped by the position identification according to the position identification of the breakage    S810

Executing a corresponding shutdown operation according to the searched shutdown operation execution instruction    S820

FIG. 8

900 — Acquisition module

910 — Determination module

920 — Collection module

930 — Execution module

FIG. 9

10

1001 — Processor

1002 — Memory

1003

Electronic device

FIG. 10

## INTERNATIONAL SEARCH REPORT

| International application No. |
| --- |
| **PCT/CN2022/096899** |

| A. | CLASSIFICATION OF SUBJECT MATTER |
| --- | --- |

B21C 51/00(2006.01)i;  B21B 1/40(2006.01)i;  B65H 63/00(2006.01)i

According to International Patent Classification (IPC) or to both national classification and IPC

| B. | FIELDS SEARCHED |
| --- | --- |

Minimum documentation searched (classification system followed by classification symbols)

B21C; B21B; B65H

Documentation searched other than minimum documentation to the extent that such documents are included in the fields searched

Electronic data base consulted during the international search (name of data base and, where practicable, search terms used)

CNABS; CNTXT; DWPI; SIPOABS; VEN; USTXT; EPTXT; WOTXT; 万方, WANFANG: 极片, 辊, 速度, 检测, 断裂, 破了piece, roll, speed, detecting, breakage.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2013111613 A (JFE STEEL CORP.) 10 June 2013 (2013-06-10)<br>description, paragraphs [0006]-[0049], and figures 1-4 | 1-18 |
| X | US 3932854 A (ICI LTD.) 13 January 1976 (1976-01-13)<br>description, column 3, line 59-column 5, line 16, and figures 1-4 | 1-18 |
| X | JP 08174023 A (KAWASAKI STEEL CORP.) 09 July 1996 (1996-07-09)<br>description, paragraphs [0019]-[0048], and figures 1-3 | 1-18 |
| X | CN 105501887 A (SHENYANG ALUMINUM & MAGNESIUM ENGINEERING & RESEARCH INSTITUTE CO., LTD.) 20 April 2016 (2016-04-20)<br>description, paragraphs [0014]-[0018], and figure 1 | 1-18 |
| A | CN 110586650 A (JIANGSU TAFEL NEW ENERGY TECHNOLOGY CO., LTD. et al.) 20 December 2019 (2019-12-20)<br>entire document | 1-18 |
| A | JP 0429052 A (NISSHIN STEEL CO., LTD.) 31 January 1992 (1992-01-31)<br>entire document | 1-18 |
| A | JP 0952154 A (KAWASAKI STEEL CORP.) 25 February 1997 (1997-02-25)<br>entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 September 2022** | **28 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2022/096899** |

| Patent document cited in search report | | | Publication date (day/month/year) | Patent family member(s) | | | Publication date (day/month/year) |
| --- | --- | --- | --- | --- | --- | --- | --- |
| JP | 2013111613 | A | 10 June 2013 | JP | 5845853 | B2 | 20 January 2016 |
| US | 3932854 | A | 13 January 1976 | NL | 7206649 | A | 21 November 1972 |
| | | | | GB | 1363283 | A | 14 August 1974 |
| | | | | IT | 955637 | B | 29 September 1973 |
| | | | | FR | 2138019 | A1 | 29 December 1972 |
| | | | | DE | 2124693 | B1 | 11 January 1973 |
| | | | | GB | 1389938 | A | 09 April 1975 |
| | | | | CH | 536371 | A | 30 April 1973 |
| JP | 08174023 | A | 09 July 1996 | JP | 3458499 | B2 | 20 October 2003 |
| CN | 105501887 | A | 20 April 2016 | None | | | |
| CN | 110586650 | A | 20 December 2019 | None | | | |
| JP | 0429052 | A | 31 January 1992 | None | | | |
| JP | 0952154 | A | 25 February 1997 | JP | 3357533 | B2 | 16 December 2002 |

Form PCT/ISA/210 (patent family annex) (January 2015)